# FASCICULE DE BREVET EUROPEEN

(11) **EP 3 060 846 B1**
(45) Date de publication et mention de la délivrance du brevet: **19.02.2020**
(21) Numéro de dépôt: 14806077.5
(22) Date de dépôt: 22.10.2014
(51) Int. Cl.: F23G 5/46, F23G 5/48, F23G 5/50

(54) **PROCÉDÉ ET INSTALLATION DE VALORISATION ÉNERGETIQUE DE DÉCHETS**
VERFAHREN UND EINRICHTUNG ZUR ENERGIEGEWINNUNG AUS ABFÄLLEN
METHOD AND FACILITY FOR RECOVERING ENERGY FROM WASTE

(30) Priorité: 24.10.2013 FR 1360386
(43) Date de publication de la demande: 31.08.2016
(73) Titulaire: SUEZ Groupe, 92040 Paris la Défense Cedex (FR)
(72) Inventeur: PEREGRINA, Carlos, F-92500 Rueil Malmaison (FR); AUJARD, Sylvain, F-95110 Sannois (FR)
(74) Mandataire: IPAZ
(86) Numéro de dépôt international: PCT/IB2014/065543
(87) Numéro de publication internationale: WO 2015/059653

(56) Documents cités:
- EP-A1- 0 671 587
- EP-A1- 1 726 876
- WO-A1-2013/099208
- DE-A1- 19 721 712
- DE-C1- 19 622 115
- JP-A- H0 894 058
- US-A- 5 862 762
- US-A1- 2009 050 076

## Description

L'invention est relative à un procédé de valorisation énergétique de déchets, en particulier de déchets urbains et/ou industriels, comprenant une étape d'incinération des déchets dans un four, puis le passage des gaz de combustion du four dans une chaudière de récupération pour une production de vapeur d'eau, la température de ces gaz de combustion étant maintenue inférieure à une valeur maximale déterminée afin de limiter la corrosion de la chaudière de récupération et/ou des parois du four, les gaz de combustion étant ensuite dirigés vers une unité de traitement avant évacuation à l'atmosphère.

La demande internationale WO2013/099208 décrit une installation pour incinérer des déchets dans un four, dans laquelle la vapeur d'eau sortant de la chaudière de récupération traverse un surchauffeur externe pour y subir une surchauffe avant injection dans une turbine. Les fumées de combustion sortant du surchauffeur sont injectées dans l'installation au niveau de la chambre de combustion primaire.

La chaudière de récupération comprend un échangeur de chaleur gaz de combustion / eau et/ou vapeur d'eau, et permet de récupérer de l'énergie thermique libérée par la combustion de déchets. Une telle chaudière installée en aval d'un four d'incinération de déchets remplit deux fonctions principales.

La première fonction consiste à abaisser la température des gaz de combustion avant qu'ils ne soient dépollués dans l'unité de traitement des fumées.

La seconde fonction est de valoriser l'énergie thermique provenant de la combustion des déchets en produisant de la vapeur d'eau qui est soit directement utilisée dans un réseau de chaleur, soit injectée dans une turbine à vapeur couplée à un alternateur, cet ensemble étant désigné par groupe turboalternateur ou GTA, pour une production d'électricité.

L'invention concerne plus particulièrement, mais non exclusivement, le cas où la vapeur d'eau produite par la chaudière de récupération est utilisée pour l'entraînement d'une turbine à vapeur, et la production d'électricité.

L'invention vise, notamment, à améliorer le rendement énergétique du procédé de valorisation.

L'un des moyens permettant d'améliorer ce rendement énergétique consiste à augmenter la température de la vapeur d'eau injectée dans la turbine. Toutefois, lors de la combustion des déchets, des éléments contenus dans ces déchets se retrouvent, en partie, dans les gaz de combustion sous forme de polluants. La température des gaz de combustion et celle de la vapeur d'eau ont une influence sur la corrosion des composants, notamment des tubes, constituant la chaudière de récupération et/ou sur la corrosion des parois du four. Plus la température des gaz de combustion et des tubes de la chaudière de récupération est élevée, plus la vitesse de corrosion des composants de la chaudière et du four augmente.

Aussi, pour limiter la corrosion, la température des gaz de combustion dans le four est maintenue inférieure à une valeur limite maximale, notamment d'environ 850°C.

Cette contrainte constitue un frein à l'amélioration du rendement énergétique, puisque la température de la vapeur d'eau ne peut pas être augmentée au-delà d'une limite imposée par des considérations de corrosion.

Par ailleurs, il existe des déchets à PCI élevé (Pouvoir Calorifique Inférieur), notamment formés par du bois mis au rebut, dont l'incinération dans le four est limitée, afin que les gaz de combustion ne dépassent pas la limite maximale déterminée.

L'invention a pour but, surtout d'améliorer le rendement énergétique du procédé de valorisation de déchets sans augmenter la corrosion de la chaudière et/ou des parois du four, tout en offrant la possibilité d'exploiter le potentiel thermique de déchets à PCI élevé pour produire un maximum d'énergie électrique.

Selon l'invention, le procédé de valorisation énergétique de déchets, comprenant une étape d'incinération des déchets dans un four, puis le passage des gaz de combustion du four dans une chaudière de récupération pour une production de vapeur d'eau, ladite chaudière de récupération comportant des faisceaux tubulaires d'échange thermique alimentés en eau, la température de ces gaz de combustion étant maintenue inférieure à une valeur maximale déterminée afin de limiter la corrosion de la chaudière de récupération et/ou des parois du four, les gaz de combustion étant ensuite dirigés vers une unité de traitement avant évacuation à l'atmosphère, et où
- un gaz auxiliaire est brûlé à l'extérieur du four, dans un surchauffeur externe,
- la vapeur d'eau sortant de la chaudière de récupération traverse le surchauffeur externe pour y subir une surchauffe avant injection dans une turbine, les fumées de combustion du gaz auxiliaire sortant du surchauffeur se trouvant à une température inférieure à la valeur maximale admissible dans le four,
- et ces fumées de combustion du gaz auxiliaire dans le surchauffeur sont récupérées par une conduite pour être injectées dans l'installation au niveau de la chaudière de récupération pour récupérer l'énergie encore contenue dans les fumées de combustion du taz auxiliaire sortant par la conduite, et sont évacuées avec les gaz de combustion du four pour être traitées dans l'unité de traitement existante pour le four.

Le gaz auxiliaire peut être un gaz contenant des polluants et dont les fumées de combustion nécessitent un traitement avant rejet dans l'atmosphère. Selon l'invention, ce traitement est assuré par l'unité de traitement déjà prévue sur le four, ce qui permet d'éviter un investissement dans une unité de traitement supplémentaire.

Le gaz auxiliaire peut être produit soit dans un réacteur de gazéification utilisant du bois déchet, du bois et/ou de la biomasse, le gaz auxiliaire étant alors dénommé syngaz, soit dans une installation de méthanisation utilisant des déchets ménagers ou assimilés, le gaz auxiliaire étant alors dénommé biogaz. En variante, le gaz auxiliaire brûlé dans le surchauffeur externe peut être du gaz naturel, ou un mélange de gaz naturel et/ou de syngaz et/ou de biogaz.

Le surchauffeur externe comporte un faisceau tubulaire, pour la vapeur d'eau, qui n'est pas en contact avec les gaz de combustion des déchets brûlés dans le four et par conséquent se trouve protégé des polluants.

Le gaz auxiliaire peut être obtenu à l'aide de déchets à PCI élevé, ce qui permet l'exploitation de l'énergie thermique de ces déchets.

L'augmentation de la température de la vapeur surchauffée, provenant de la chaudière a lieu à l'extérieur de l'installation, sans créer d'augmentation de la corrosion des éléments de la chaudière et/ou du four.

La température des fumées de combustion à la sortie du surchauffeur est inférieure à la température maximale admissible dans l'ensemble four-chaudière de récupération. De la sorte, l'injection des fumées de combustion du surchauffeur dans la chaudière permet une récupération supplémentaire d'énergie, sans augmentation des risques de corrosion.

La température des fumées de combustion du gaz auxiliaire, dans le surchauffeur, peut dépasser 1000°C, tandis que la température de ces fumées à la sortie du surchauffeur doit être inférieure à 600°C.

L'invention est également relative à une installation pour la mise en œuvre du procédé défini précédemment, cette installation comportant un four pour la combustion de déchets, suivi d'une chaudière de récupération pour produire de la vapeur d'eau à l'aide des gaz de combustion du four, ladite chaudière de récupération comportant des faisceaux tubulaires d'échange thermique alimentés en eau, des moyens pour maintenir la température des gaz de combustion inférieure à une valeur maximale afin de limiter la corrosion de la chaudière de récupération et/ou des parois du four, et une unité de traitement des gaz de combustion avant évacuation à l'atmosphère, ladite installation comportant une source de gaz auxiliaire, un surchauffeur situé à l'extérieur du four comportant au moins un brûleur pour le gaz auxiliaire, et une conduite de liaison entre la sortie de vapeur de la chaudière de récupération et l'entrée de vapeur dans un faisceau tubulaire du surchauffeur externe, la sortie de vapeur du surchauffeur externe étant reliée à un utilitaire, notamment une turbine à vapeur, caractérisée en ce que la sortie des fumées de combustion du surchauffeur externe est reliée à la chaudière de récupération au niveau des faisceaux tubulaire pour injection des fumées dans cette chaudière.

Avantageusement, la source de gaz auxiliaire est constituée par un réacteur de gazéification de déchets, notamment de bois, de bois déchet, ou de biomasse, ou par un méthaniseur pouvant fonctionner en utilisant des déchets ménagers ou assimilés pour produire du biogaz.

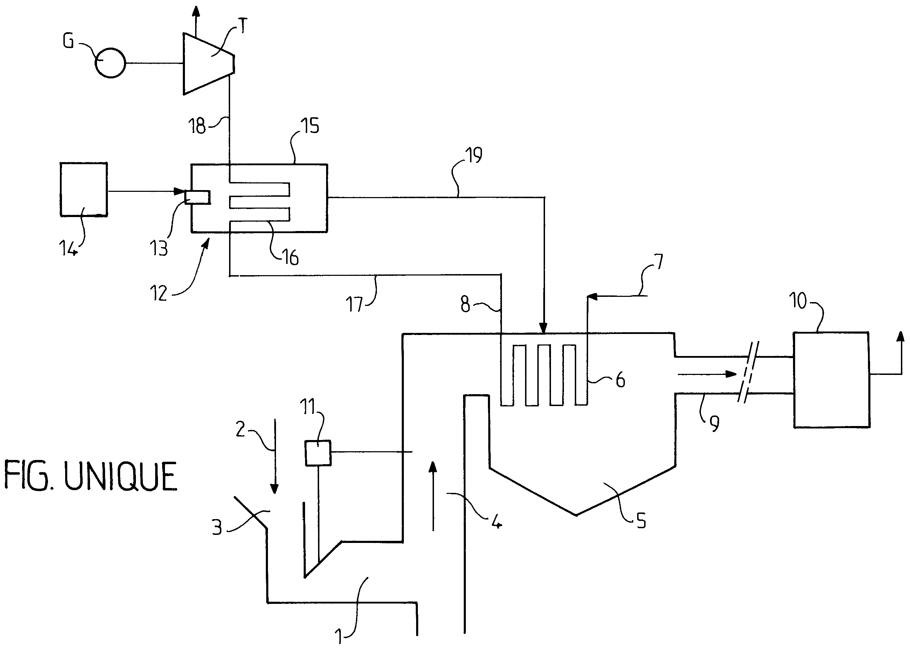

L'invention consiste, mises à part les dispositions exposées ci-dessus, en un certain nombre d'autres dispositions dont il sera plus explicitement question ci-après à propos d'un exemple de réalisation décrit avec référence au dessin annexé, mais qui n'est nullement limitatif. Sur ce dessin :
la Figure unique est un schéma d'une installation de valorisation énergétique de déchets mettant en œuvre le procédé de l'invention.

En se reportant à la figure du dessin, on peut voir une installation de valorisation énergétique de déchets, en particulier pour la production d'énergie électrique, avec des combustibles de relativement basse qualité constitués par des déchets urbains ou industriels.

L'installation comporte un four 1 pour l'incinération des déchets 2 introduits dans le four par une alimentation 3. Les gaz de combustion des déchets sont dirigés par une conduite 4 vers une chaudière de récupération 5 comportant des faisceaux tubulaires 6 d'échange thermique alimentés en eau par une conduite d'entrée 7 et donnant sur leur sortie 8 de la vapeur d'eau destinée à l'entraînement d'une turbine T couplée à un alternateur G pour la production d'électricité.

Les gaz de combustion sortent de la chaudière 5 par une conduite 9 et sont dirigés vers une unité de traitement 10 avant d'être évacués à l'atmosphère.

Lors de la combustion des déchets dans le four 1, des éléments contenus dans ces déchets se retrouvent, en partie, dans les gaz de combustion sous forme de polluants ayant une action corrosive sur les éléments de la chaudière de récupération, notamment sur les faisceaux tubulaires 6, et/ou sur les parois du four et de la chaudière. Cette action corrosive est d'autant plus élevée que la température des gaz de combustion est élevée.

Pour limiter cette corrosion, tout en assurant un fonctionnement acceptable de l'installation, la température des gaz de combustion dans la chambre et la conduite de combustion 4 du four est maintenue à une valeur, notamment de 850°C, inférieure à une limite supérieure, notamment d'environ 900°C. Un moyen de contrôle 11, sensible à la température des gaz de combustion dans la conduite 4, commande le débit de déchets injectés et le débit d'air de combustion pour respecter cette limite. La température des gaz de combustion à la sortie de la chaudière 5 peut être de l'ordre de 250°C, c'est-à-dire que la température a été suffisamment abaissée avant que les gaz ne soient dépollués dans l'unité de traitement 10.

La vapeur sortant par la conduite 8 est à une température relativement élevée, en particulier de 350 à 400°C.

Une amélioration du rendement énergétique de l'installation pourrait être envisagée en augmentant la température de sortie de la vapeur d'eau provenant de la chaudière 5. Mais ceci nécessiterait une augmentation de la température des gaz de combustion du four, entraînant une augmentation de la corrosion des éléments de l'installation, ce qu'il convient d'éviter. Par ailleurs, il existe des déchets à PCI élevé, notamment du bois, du bois déchet ou de la biomasse, dont l'incinération dans le four 1 est écartée ou limitée afin de ne pas dépasser la température maximale limite des gaz de combustion.

Selon l'invention, un surchauffeur 12 externe au four 1 est prévu. Ce surchauffeur 12 comporte au moins un brûleur 13 pour la combustion d'un gaz auxiliaire provenant d'une source 14.Le surchauffeur 12 comporte également une chambre de combustion 15 dans laquelle est disposé un faisceau tubulaire 16 dont l'entrée est reliée par une conduite 17 à la sortie 8 de vapeur de la chaudière 5. La sortie de vapeur du faisceau 16 est reliée par une conduite 18 à l'entrée haute pression de la turbine T.

Les fumées provenant de la combustion du gaz auxiliaire dans le surchauffeur 12 sont récupérées par une conduite 19 pour être injectées dans la chaudière de récupération 5, notamment au niveau du faisceau tubulaire 6.

La source 14 de gaz auxiliaire peut être constituée par un réacteur de gazéification de déchets, notamment de déchets à PCI élevé, en particulier de bois, de bois déchet, ou de biomasse, le gaz auxiliaire étant alors dénommé syngaz. Selon une autre possibilité, la source 14 peut être constituée par un méthaniseur de déchets ménagers ou similaires produisant un gaz dénommé biogaz, riche en méthane. Selon une autre possibilité, la source 14 peut être constituée par une alimentation en gaz naturel, ou par un mélange de gaz naturel et/ou de syngaz et/ou de biogaz.

Les fumées de combustion produites par le brûleur 13 permettent de surchauffer la vapeur provenant de la chaudière 5, sans modification de cette chaudière et sans provoquer une augmentation de la corrosion du faisceau tubulaire 6 de la chaudière et/ou des parois du four et de la chaudière.

Les fumées de combustion à la sortie du surchauffeur 12, arrivant par la conduite 19, sont à une température inférieure à la valeur maximale admissible pour le four 1 et la chaudière 5 et peuvent donc être injectées sans créer de problèmes dans ladite chaudière 5.

Ces fumées de combustion provenant du brûleur 13 nécessitent généralement un traitement avant rejet à l'atmosphère. Leur injection dans la chaudière 5 permet de bénéficier de l'unité de traitement 10, et donc d'éviter un investissement supplémentaire pour le traitement de ces fumées.

L'invention permet d'améliorer le rendement énergétique de l'incinération de déchets en augmentant la température de surchauffe de la vapeur d'eau, à la sortie du surchauffeur 15, sans augmenter la corrosion dans la chaudière 5 et/ou dans le four 1.

De plus, l'invention permet d'exploiter des déchets à PCI élevé comme source 14 de gaz auxiliaire avec un rendement de production électrique optimale par alimentation de la turbine T en vapeur surchauffée. Le rendement ainsi obtenu est supérieur à celui de la combustion du gaz auxiliaire dans un moteur thermique.

L'invention permet un gain en surchauffe de la vapeur d'eau sans modifier le four 1, ni la chaudière 5 déjà en place.

Les tubes 16 du surchauffeur externe ne sont pas en contact avec les gaz de combustion des déchets provenant du four et par conséquent avec les polluants contenus dans ces gaz de combustion.

La chaudière 5 permet de récupérer l'énergie encore contenue dans les fumées de combustion du gaz auxiliaire sortant par la conduite 19.

L'augmentation de la température de la vapeur surchauffée à l'entrée de la turbine permet d'augmenter le rendement électrique de l'ensemble turbine-alternateur et ainsi de produire davantage d'électricité.

L'installation d'un surchauffeur externe peut être effectuée sur une chaudière de récupération existante.

## Revendications

1. Procédé de valorisation énergétique de déchets, en particulier de déchets urbains et/ou industriels, comprenant une étape d'incinération des déchets dans un four (1), puis le passage des gaz de combustion du four dans une chaudière de récupération (5) pour une production de vapeur d'eau, ladite chaudière de récupération comportant des faisceaux tubulaires (6) d'échange thermique alimentés en eau, la température de ces gaz de combustion étant maintenue inférieure à une valeur maximale déterminée afin de limiter la corrosion de la chaudière de récupération et/ou des parois du four, les gaz de combustion étant ensuite dirigés vers une unité de traitement (10) avant évacuation à l'atmosphère, et où:
- un gaz auxiliaire est brûlé à l'extérieur du four, dans un surchauffeur externe (12),
- la vapeur d'eau sortant de la chaudière de récupération traverse le surchauffeur externe pour y subir une surchauffe avant injection dans une turbine (T), les fumées de combustion du gaz auxiliaire sortant du surchauffeur se trouvant à une température inférieure à la valeur maximale admissible dans le four,
**caractérisé en ce que**
- ces fumées de combustion du gaz auxiliaire dans le surchauffeur (12) sont récupérées par une conduite (19) pour être injectées dans l'installation au niveau du faisceau tubulaire (6) de la chaudière de récupération pour récupérer l'énergie encore contenue dans les fumées de combustion du gaz auxiliaire sortant par la conduite (19), et sont évacuées avec les gaz de combustion du four pour être traitées dans l'unité de traitement existante pour le four.

2. Procédé selon la revendication 1, **caractérisé en ce que** le gaz auxiliaire est produit soit dans un réacteur de gazéification utilisant du bois déchet, du bois et/ou de la biomasse, le gaz auxiliaire étant alors dénommé syngaz, soit dans une installation de méthanisation utilisant des déchets ménagers ou assimilés, le gaz auxiliaire étant alors dénommé biogaz.

3. Procédé selon la revendication 1, **caractérisé en ce que** le gaz auxiliaire brûlé dans le surchauffeur externe est du gaz naturel, ou un mélange de gaz naturel et/ou de syngaz et/ou de biogaz.

4. Procédé selon l'une quelconque des revendications précédentes, **caractérisé en ce que** la température des fumées de combustion à la sortie du surchauffeur est inférieure à la température maximale admissible dans l'ensemble four-chaudière de récupération.

5. Installation pour la mise en oeuvre du procédé selon la revendication 1, cette installation comportant un four (1) pour la combustion de déchets, suivi d'une chaudière de récupération (5) pour produire de la vapeur d'eau à l'aide des gaz de combustion du four, ladite chaudière de récupération comportant des faisceaux tubulaires (6) d'échange thermique alimentés en eau, des moyens (11) pour maintenir la température des gaz de combustion inférieure à une valeur maximale afin de limiter la corrosion de la chaudière de récupération et/ou des parois du four, et une unité (10) de traitement des gaz de combustion avant évacuation à l'atmosphère,
l'installation comportant une source (14) de gaz auxiliaire, un surchauffeur (12) situé à l'extérieur du four, comportant au moins un brûleur (13) pour le gaz auxiliaire, et une conduite (17) de liaison entre la sortie (8) de vapeur de la chaudière de récupération et l'entrée de vapeur dans un faisceau tubulaire (16) du surchauffeur externe, la sortie de vapeur (18) du surchauffeur externe étant reliée à un utilitaire, notamment une turbine à vapeur (T),
**caractérisée en ce que** la sortie des fumées de combustion (19) du surchauffeur externe est reliée à la chaudière de récupération au niveau des faisceaux tubulaire (6) pour injection des fumées dans cette chaudière.

6. Installation selon la revendication 5, **caractérisée en ce que** la source de gaz auxiliaire (14) est constituée par un réacteur de gazéification de déchets, notamment de bois, de bois déchet, ou de biomasse, ou par un méthaniseur pouvant fonctionner en utilisant des déchets ménagers ou assimilés pour produire du biogaz.

## Patentansprüche

1. Verfahren zur Energiegewinnung aus Abfällen, insbesondere aus Siedlungs- oder/und Industriabfällen, mit einem Schritt zur Müllverbrennung in einem Ofen (1), dem anschließenden Strömen des Brenngases aus dem Brennofen in einen Rückgewinnungskessel (5) zur Erzeugung von Wasserdampf, wobei der Rückgewinnungskessel Rohrbündel (6) zum Wärmeaustausch aufweist, die mit Wasser beaufschlagt sind, wobei die Temperatur der Brenngase unterhalb einem bestimmten Maximalwert gehalten wird zwecks Einschränkung der Korrosion des Rückgewinnungskessels und/oder der Ofenwände, wobei die Brenngase dann in Richtung einer Verarbeitungseinheit (10) geleitet werden, bevor sie in die Atmosphäre abgeführt werden, und bei dem:
- ein Hilfsgas außerhalb des Ofens in einem externen Überhitzer (12) verbrannt wird,
- der aus dem Rückgewinnungskessel austretende Wasserdampf den externen Überhitzer passiert, um dort vor der Injektion in eine Turbine (T) überhitzt zu werden, wobei die aus dem Überhitzer austretenden Abgase der Hilfsgasverbrennung eine Temperatur aufweisen, die niedriger ist als der zulässige Maximalwert in dem Ofen,
**dadurch gekennzeichnet, dass**
- die Abgase der Hilfsgasverbrennung in dem Überhitzer (12) durch eine Leitung (19) zurückgewonnen werden, um in die Vorrichtung in Höhe des Rohrbündels (6) des Rückgewinnungskessels injiziert zu werden zur Rückgewinnung der noch in den durch die Leitung (19) austretenden Abgasen der Hilfsgasverbrennung enthaltene Energie, und wobei die Abgase mit den Brenngasen auf dem Ofen abgeführt werden, um in der für den Ofen bestehenden Verarbeitungseinheit verarbeitet zu werden.

2. Verfahren nach Anspruch 1, **dadurch gekennzeichnet, dass** das Hilfsgas entweder in einem Vergasungsreaktor hergestellt wird, der Holzabfälle, Holz und/oder Biomasse verwendet, wobei das Hilfsgas dann als Synthesegas bezeichnet wird, oder in einer Methanisierungsanlage hergestellt wird, die Haushaltsabfälle oder dergleichen verwendet, wobei das Hilfsgas dann als Biogas bezeichnet wird.

3. Verfahren nach Anspruch 1, **dadurch gekennzeichnet, dass** das in dem externen Überhitzer verbrannte Hilfsgas Erdgas ist oder ein Gemisch aus Erdgas und/oder Synthesegas und/oder Biogas.

4. Verfahren nach einem der vorstehenden Ansprüche, **dadurch gekennzeichnet, dass** die Temperatur der Verbrennungsabgase am Ausgang des Überhitzers niedriger ist als die maximal zulässige Temperatur in der Baugruppe Ofen-Rückgewinnungskessel.

5. Vorrichtung zur Implementierung des Verfahrens nach Anspruch 1, wobei die Vorrichtung aufweist:
einen Ofen (1) zur Abfallverbrennung und einen Rückgewinnungskessel (5) zum Herstellen von Wasserdampf mit Hilfe der Brenngase des Ofens, wobei der Rückgewinnungskessel Rohrbündel (6) zum Wärmeaustausch aufweist, die mit Wasser beaufschlagt sind, Hilfsmittel (11), um die Temperatur des Brenngases unter einem Maximalwert zu halten zwecks Einschränkung der Korrosion des Rückgewinnungskessels und/oder der Ofenwände, und eine Verarbeitungseinheit (10) zur Verarbeitung des Brenngases, bevor dieses in die Atmosphäre abgeführt wird,
wobei die Vorrichtung aufweist:
eine Hilfsgasquelle (14), einen außerhalb des Ofens angeordneten Überhitzer (12), der mindestens einen Brenner (13) für das Hilfsgas aufweist, und eine Leitung (17) zur Verbindung zwischen dem Dampfausgang (8) des Rückgewinnungskessels und dem Dampfeingang in einem Rohrbündel (16) des externen Überhitzers, wobei der Dampfausgang (18) des externen Überhitzers mit einer Kraftmaschine verbunden ist, insbesondere mit einer Dampfturbine (T),
**dadurch gekennzeichnet, dass**
der Verbrennungsabgasausgang (19) des externen Überhitzers zur Injektion der Abgase in den Kessel auf Höhe der Rohrbündel (6) mit dem Rückgewinnungskessel verbunden ist.

6. Vorrichtung nach Anspruch 5, **dadurch gekennzeichnet, dass** die Hilfsgasquelle (14) aus einem Abfallvergasungsreaktor besteht, der insbesondere Holz, Holzabfälle oder Biomasse verwendet, oder aus einer Methanisierungsanlage besteht, die zur Herstellung von Biogas unter Verwendung von Haushaltsabfällen oder dergleichen funktioniert.

## Claims

1. Method for recovering energy from waste, in particular urban and/or industrial waste, comprising a step of incinerating the waste in a furnace (1), then passing the combustion gases from the furnace into a recovery boiler (5) in order to produce water vapour, said recovery boiler comprising tubular heat exchange bundles (6) supplied with water, the temperature of these combustion gases being maintained lower than a fixed maximum value in order to limit corrosion of the recovery boiler and/or of the walls of the furnace, the combustion gases then being conducted to a treatment unit (10) before being evacuated to the atmosphere, and where
- an auxiliary gas is burned outside the furnace in an external superheater (12),
- the water vapour emerging from the recovery boiler passes through the external superheater in order to be superheated therein before being injected into a turbine (T), the combustion fumes of the auxiliary gas emerging from the superheater being at a temperature lower than the maximum value admissible in the furnace,
**characterized in that**
- these combustion fumes of the auxiliary gas in the superheater (12) are recovered by a conduit (19) to be injected into the installation at the level of tubular bundles (6) of the recovery boiler for recovering energy stilled contained in the combustion fumes of the auxiliary gas emerging from the conduit (19), and are
evacuated with the combustion gases of the furnace in order to be treated in the existing treatment unit for the furnace.

2. Method according to Claim 1, **characterized in that** the auxiliary gas is produced either in a gasification reactor utilizing wood waste, wood and/or biomass, in which case the auxiliary gas is referred to as syngas, or in a methanation installation utilizing household or similar waste, in which case the auxiliary gas is referred to as biogas.

3. Method according to Claim 1, **characterized in that** the auxiliary gas burned in the external superheater is natural gas, or a mixture of natural gas and/or syngas and/or biogas.

4. Method according to any one of the preceding claims, **characterized in that** the temperature of the combustion fumes at the outlet of the superheater is lower than the maximum temperature admissible in the furnace-recovery boiler assembly.

5. Installation for carrying out the method according to Claim 1, the installation comprising a furnace (1) for burning waste, followed by a recovery boiler (5) for producing steam with the aid of the combustion gases of the furnace, said recovery boiler comprising tubular heat exchange bundles (6) supplied with water, the means (11) for maintaining the temperature of the combustion gases lower than a maximum value in order to limit corrosion of the recovery boiler and/or of the walls of the furnace, and a unit (10) for treating the combustion gases before they are evacuated to the atmosphere,
the installation comprising a source (14) of auxiliary gas, a superheater (12) located outside the furnace and including at least one burner (13) for the auxiliary gas and a line (17) connecting the steam outlet (8) of the recovery boiler to the steam inlet to a tube bundle (16) of the external superheater, the steam outlet (18) of the external superheater being connected to a utility element, in particular a steam turbine (T), **characterized in that** the outlet of the combustion fumes (19) of the external superheater is connected to the recovery boiler at the level of tubular bundles (6) for injection of the fumes into this boiler.

6. Installation according to Claim 5, **characterized in that** the auxiliary gas source (14) is formed by a gasification reactor for waste, in particular wood, wood waste or biomass, or by a methanizer able to operate using household or similar waste in order to produce biogas.
